**Europäisches Patentamt**

**European Patent Office**

**Office européen des brevets**

(19)

(11) Veröffentlichungsnummer: **0 335 057 B1**

# (12) EUROPÄISCHE PATENTSCHRIFT

(45) Veröffentlichungstag der Patentschrift:
**08.01.92 Patentblatt 92/02**

(51) Int. Cl.$^5$: **B28B 5/02, B28B 5/04, B28B 13/04, B28B 3/00**

(21) Anmeldenummer: **88810589.7**

(22) Anmeldetag: **26.08.88**

(54) **Vorrichtung zur Herstellung von Formkörpern und Verfahren zum Betrieb der Vorrichtung.**

(30) Priorität: **24.03.88 DE 3809938**

(43) Veröffentlichungstag der Anmeldung:
**04.10.89 Patentblatt 89/40**

(45) Bekanntmachung des Hinweises auf die Patenterteilung:
**08.01.92 Patentblatt 92/02**

(84) Benannte Vertragsstaaten:
**AT BE CH DE FR GB IT LI NL SE**

(56) Entgegenhaltungen:
**DE-A- 1 584 558
DE-A- 2 430 941
DE-A- 3 203 645
DE-A- 3 222 802
DE-A- 3 446 092
DE-C- 584 907
FR-A- 1 009 232
FR-A- 2 531 368
US-A- 1 491 503
US-A- 2 466 339**

(73) Patentinhaber: **JOST AG HEIMBERG MASCHINENFABRIK Förder- und Aufbereitungstechnik
Alpenstrasse 111
CH-3627 Heimberg (CH)**

(72) Erfinder: **Birrer, Josef
Weidenweg 36
CH-4608 Thun (CH)**
Erfinder: **Beyeler, Peter
Hondrichstrasse 54
CH-3700 Spiez (CH)**

(74) Vertreter: **Mohnhaupt, Dietrich et al
AMMANN PATENTANWAELTE AG BERN
Schwarztorstrasse 31
CH-3001 Bern (CH)**

EP 0 335 057 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung zur Herstellung von Formkörpern, nämlich von solchen, die im wesentlichen aus einem schüttfähigen Haufwerk, einem hydraulischen Bindemittel und Wasser bestehen, in einer Presse. Sie betrifft weiterhin ein Verfahren zum Betrieb dieser Vorrichtung.

Als schüttfähiges Haufwerk kommen beispielsweise feste Rückstände der Rauchgasentstaubung wie Flugasche in Betracht, aber auch getrockneter Klärschlamm, nasse oder trockene Filterrückstände aus der Rauchentschwefelung, und andere fein- bis grobkörnige Abfallstoffe. Alle diese Haufwerke sind zur Verfestigung zwecks Abfalldeponierung bestimmt, und zwar in einer kompakten, nicht auslaugefähigen Form. Darüber hinaus ermöglicht die Vorrichtung die Herstellung von beliebigen Formkörpern, die nicht für eine Abfallverfestigung bestimmt sind.

Als Bindemittel kommen vorwiegend die verschiedenen Zementsorten in Frage, entweder einzeln oder im Gemisch miteinander sowie mit anderen hydraulischen Bindemitteln wie Gips, Magnesiumzement usw.

Die Vorrichtung und das Betriebsverfahren bezwecken nicht die Herstellung von Gipsbauplatten, worauf die Erfindung nicht gerichtet sein soll.

Unter "Haufwerk" soll in dieser Beschreibung eine schütt- oder rieselfähige Feststoffansammlung in ihrer allgemeinsten Form verstanden werden, und zwar in Uebereinstimmung mit der Definition von P. Gassmann, Physikalische Grundlagen der Chemie-Ingenieur-Technik, Sauerländer & Co. 1961, Seite 359f.

Bis vor einigen Jahren wurden Abfälle der genannten Art auf normalen Mülldeponien abgelagert. Dort waren sie aber einer Auslaugung durch atmosphärische Einflüsse ausgesetzt. Durch die Einführung von Rauchgasreinigungsanlagen in Kraftwerken und Kehrichtverbrennungsanlagen fällt heute immer mehr fester Abfall an, auch weil die Kehrichtmenge als solche steigt. Gleichzeitig werden die nutzbaren Deponieflächen immer seltener und müssen zum Schutze des Grundwassers besonders abgedichtet und überwacht werden.

Aus diesen Gründen verbietet sich heute die Ablagerung der staub- und körnchenförmigen, insbesondere anorganischen Abfallstroffe als solche. Sie müssen vielmehr zuerst in eine Form gebracht werden, die dem Angriff von Sickerwasser, Regen, Schnee usw. widersteht und erst noch so kompakt wie möglich ist, um einen leichten Transport und eine platzsparende Deponie zu ermöglichen.

Es ist bereits vorgeschlagen und ausgeführt worden, Formkörper aus festen, anorganischen, feinkörnigen Abfällen und hydraulischen Bindemitteln herzustellen, indem man ein Gemisch dieser Stoffe mit Wasser zu einem Mörtel anmacht, diesen in Formen giesst, die Masse rüttelt und dann erstarren lässt. Dieses Verfahren ist langwierig, umständlich und für einen kontinuierlichen Betrieb nicht geeignet.

In der DE-A1-3621824 ist ein Verfahren zur Herstellung einer als Betonzuschlag vorgesehenen Masse durch Verpressen einer Mischung aus Gips, Zement und Flugasche beschrieben. Die unter einem Druck von 150 N/mm² verpresste und gehärtete Masse wird dann zu Splitt zerkleinert.

Abgesehen davon, dass die Gesetzgebung die Verwendung der meisten Verbrennungsrückstände in Baustoffen untersagt, wird nach dieser Veröffentlichung letztlich kein Formkörper erzeugt, insbesondere kein deponiefähiger Formkörper.

In der nicht vorveröffentlichten deutschen Patentanmeldung Nr. P 3809938.1 (veröffentlicht am 05.10.89) ist ein Verfahren zum Erzeugen von Formkörpern durch Verpressen eines wasserhaltigen, Flugasche und Zement enthaltenden Gemisches beschrieben. Ueberraschenderweise war nämlich gefunden worden, dass beim Verpressen solcher Gemische unter relativ geringem Druck, nämlich unter 1 bis 20 N/mm², aber während einer relativ längeren Zeitspanne von etwa 60 Sekunden, ein Formkörper erzeugt werden kann, der mit gewissen Vorsichtsmassregeln schon nach dieser Zeit ausgeformt werden kann, weil er eine genügende innere Festigkeit aufweist.

Aufgabe der Erfindung war es, eine Vorrichtung bzw. Anlage zur kontinuierlichen Herstellung von deponiefähigen Formkörpern aus den oben erwähnten Gemischen zu schaffen.

Zur Lösung der Aufgabe dienen die erfindungsgemässe Vorrichtung und das zugehörige Verfahren die in den beiden unabhängigen Patentansprüchen 1 und 10 definiert sind. Bevorzugte oder besondere Ausführungsformen bilden den Gegenstand abhängiger Ansprüche.

Als Beispiel der erfindungsgemässen Vorrichtung soll die Ausführungsform einer Anlage zum Verpressen der genannten wasserhaltigen Gemische und deren Betriebsverfahren in Einzelheiten an Hand der Zeichnung beschrieben werden.

In der Zeichnung stellen dar :

| Fig. 1 | eine schematische Seitenansicht der Vorrichtung ; |
| Fig. 2 | eine Seitenansicht der Füll- und Pressanlage ; |
| Fig. 3 | eine Stirnansicht der Füll- und Pressanlage gemäss Fig. 2 ; |
| Fig. 4 | eine Seitenansicht der Formkörper-Greifvorrichtung ; und |

2

Fig. 5A bis 5G        schematisch sieben Phasen des Pressvorgangs.

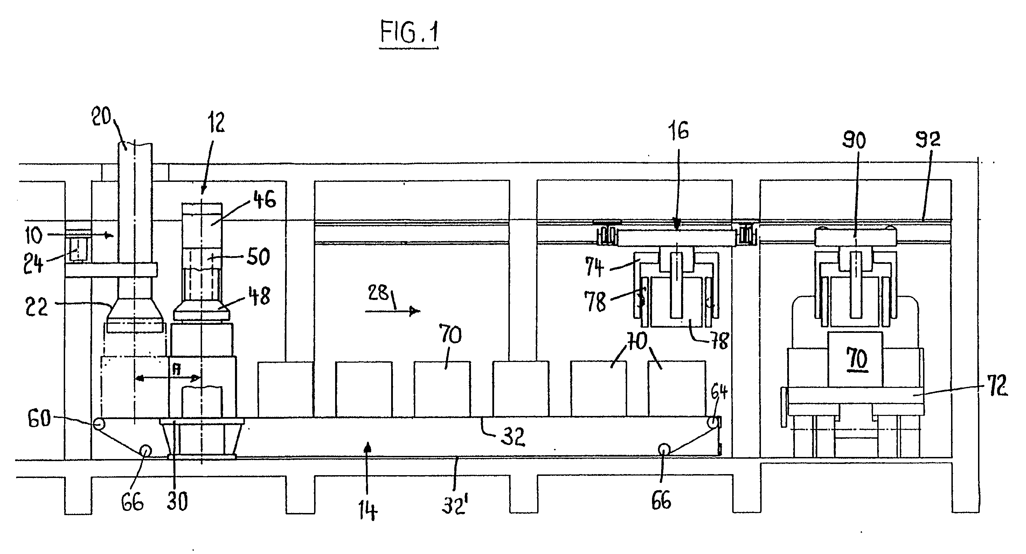

Fig. 1 zeigt zunächst die Gesamtvorrichtung schematisch in Seitenansicht. Sie enthält folgende wesentliche Teile :

1. — Eine Beschickungsstation 10 zum Befüllen einer Pressform ;
2. — eine Pressstation 12 ;
3. — eine Transportvorrichtung 14 ; und
4. — eine Greifvorrichtung 16 für die Formkörper mit Hubeinrichtung und seitlicher Transportmöglichkeit.

Diese einzelnen Teile sollen nun im einzelnen beschrieben werden. Als Beispiel wird das Verpressen zu würfeloder quaderförmigen Formkörpern gewählt. Auch anders geformte prismatische Körper wie Zylinder können bei geeigneter Ausbildung der Pressform erzeugt werden.

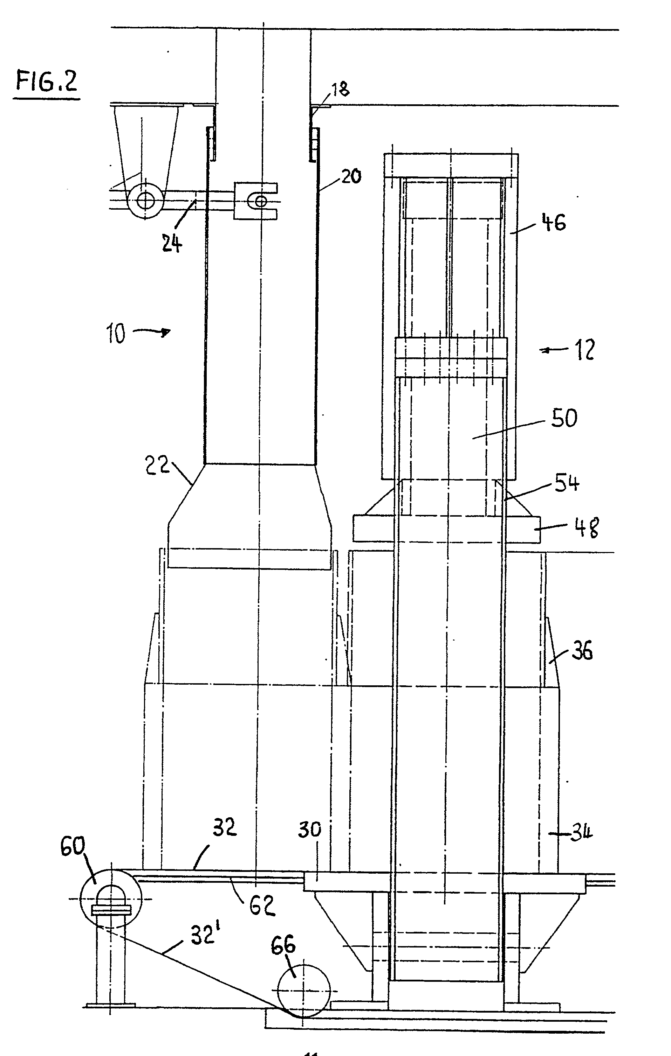

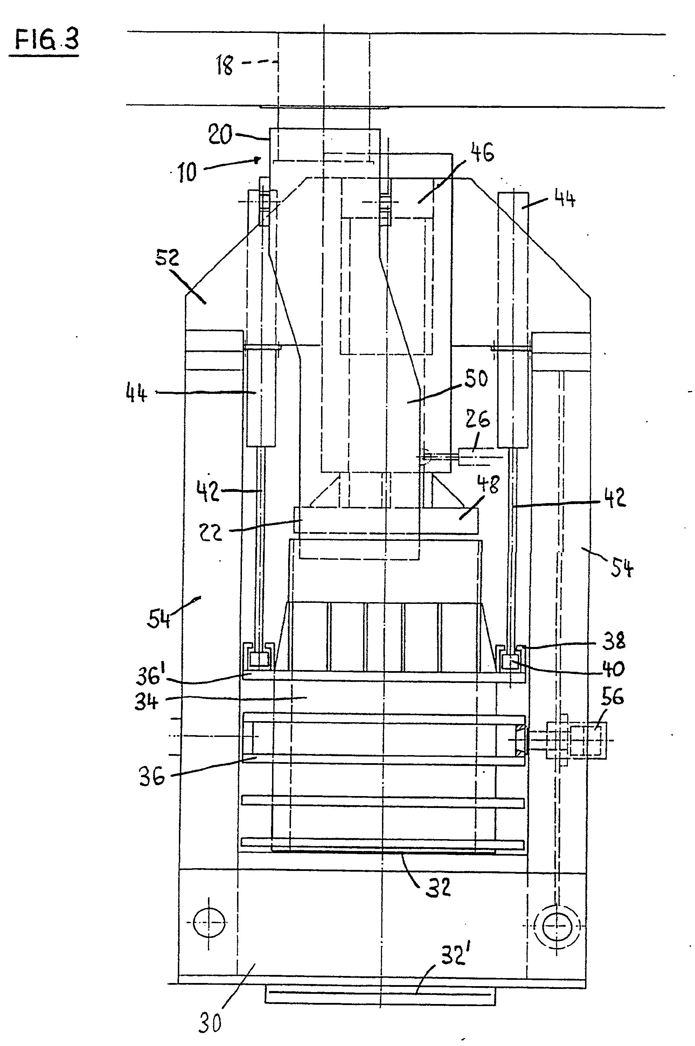

Die Pressanlage beginnt mit der Beschickungsstation 10 (Fig. 1 bis 3). Sie besteht im wesentlichen aus einem festen senkrechten Rohr oder Schacht 18, an das sich ein in allen drei Raumrichtungen bewegbares Füllrohr 20 anschliesst, das am unteren Ende in einen Fülltrichter 22 ausläuft. Mit Hilfe des Antriebs 24 kann das Füllrohr 20 gehoben und gesenkt und durch den Antrieb 26 auch in beiden horizontalen Richtungen verschoben werden. Unmittelbar daneben, in Förderrichtung 28 gesehen (Pfeil in Fig. 1) ist die Pressstation 12 angeordnet. Sie weist zunächst einen Pressentisch 30 auf. Er besteht aus einer massiven Schweisskonstruktion und hat eine feinbearbeitete Tischfläche (nicht dargestellt), auf welcher das Förderband schleift, das weiter unten beschrieben wird. Auf dem Pressentisch 30 und dort auf dem Förderband 32 steht der Form- oder Presskasten 34 (Fig. 2 und 3), der aussen mit horizontalen und vertikalen Rippen 36 verstärkt ist. Oben an der obersten horizontalen Verstärkungsrippe 36' sind zwei längsgerichtete oben offene Schienen 38 (Fig. 3) befestigt, in die Rollen 40 eingreifen, welche am unteren Ende von senkrechten Kolbenstangen 42 des Hubmotors 44 angebracht sind. Die Innenseiten des Presskastens sind glatt, insbesondere hoch glanzverchromt. Oberhalb des Presstisches 30 ist der Presszylinder 46 angeordnet, an dessen Kolbenstange 50 unten die Pressplatte 48 angebracht ist. Der Zylinder 46 bzw. ein ihn umgebender Zylinderkopf 52 ist mittels Pressensäulen 54 seitlich mit dem Pressentisch 30 verbunden, so dass sich ein torartiger Durchlass bildet, den die Pressform 34 in Längsrichtung durchfahren kann (Fig. 3). Die Pressensäulen 54 übernehmen die auftretenden Vertikalkräfte beim Pressen. Die Pressplatte 48 passt dimensionsmässig zur Pressform 34. An der Pressform 34 greift ein Positionierantrieb 56 an, der an einer Pressensäule 54 befestigt ist. Er dient zum genauen Positionieren der horizontal verfahrbaren Pressform 34 gegenüber der Pressplatte 48.

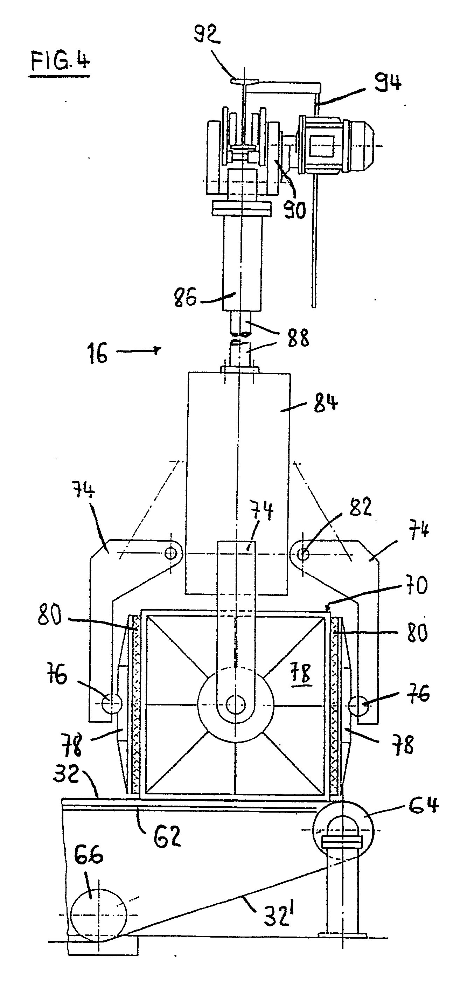

Die Transportvorrichtung 14 umfasst ein endloses Förderoder Transportband 32, 32', das über die ganze Länge der Pressanlage läuft. Der Obergurt 32 läuft, von einer vorderen Umlenkwalze 60 (Fig. 2) kommend, über einen Schleiftisch 62 als Bandauflage zur hinteren Umlenkwalze 64 (Fig. 4), und der Untergurt 32' läuft über die Lenkwalzen 66 wieder zu vorderen Umlenkwalze 60 zurück. Eine oder beide Umlenkwalzen sind angetrieben.

Der Schleiftisch 62 ist über seine ganze Länge mit mindestens einer Längsreihe von (nicht dargestellten) Lufteinblaslöchern versehen, durch die Druckluft aus einem oder mehreren (nicht gezeigten) Längskanälen, die die Löcher verbinden, zwischen Transportband 32 (Obergurt) und Schleiftisch 62 geleitet werden kann. Der Zweck dieser Massnahme wird weiter unter erläutert. Das Transportband 32, 32' besteht bevorzugt aus faserverstärktem Kunststoff, insbesondere Polyurethan. Ein Stahlband (Gliederband) ist nicht erforderlich ; es wurde gefunden, dass das Transportband unter der Pressform im Betrieb nur im elastischen Bereich beansprucht wird. Das Band 32, 32' aus Kunststoff ist an der Unterseite bevorzugt strukturiert oder rauh, die Oberseite glatt.

Die Greifvorrichtung 16 (Fig. 1 und 4) dient zum schonenden Erfassen der noch nicht ausgehärteten Formkörper 70 und zu deren Transport in ein Zwischenlager zur vollständigen Aushärtung oder auf ein Lieferfahrzeug, beispielsweise einen Eisenbahnwaggon oder einen Lastwagen 72.

Die Greifvorrichtung 16, die in Fig. 1 und 4 für das Beispiel quaderförmiger Formkörper 70 gezeigt ist, weist vier Greifer 74 auf, die miteinander jeweils einen Winkel von 90° bilden. An seinem unteren Ende ist jeder Greifer 74 über ein Kugelgelenk 76 mit einer Greifplatte 78 etwa in deren Mitte verbunden. An ihrer Innenseite ist jede Greifplatte 78 mit einem Reibbelag 80 versehen. Die Greifplatte soll den Formkörper 70 so vollstandig wie möglich bedecken, um den spezifischen Flächendruck möglichst gering zu halten.

Jeder Greifer 74 ist mit einer Achse 82 an einem Klemmblock 84 angelenkt. An einem Hubmotor 86 ist der Klemmblock 84 über eine Kolbenstange 88 verbunden. Der Hubmotor hängt an einem Fahrwerk 90, das längs der Schiene 92 verfahrbar ist. Die Stromzuführung erfolgt über Kabel oder eine Stromschiene 94.

An Hand der Fig. 5A bis 5G, worin sieben Arbeitsgänge schematisch gezeigt sind, soll nun der Betrieb der erfindungsgemässen Vorrichtung erläutert werden.

## 1. — Füllen (Fig. 5A)

Durch entsprechendes Verfahren des Transportbandes 32 nach links ist der Presskasten 34 unter den Fülltrichter 22 gebracht worden. Der Trichter 22 wurde so tief wie möglich abgesenkt.

Es wird nun durch den Fülltrichter 22 ein zum Verpressen geeignetes Gemisch eingefüllt. Solche Gemische sind oben beschrieben worden. Sie haben ungefähr die Konsistenz von feuchter, krümeliger Erde und sind schüttfähig. Während des Auffüllens wird der Fülltrichter in beiden horizontalen Richtungen bewegt und gleichzeitig gehoben, damit eine homogene Füllung des Kastens 34 gewährleistet ist. Infolge der Kompressibilität des krümeligen Gemisches beträgt das Füllvolumen etwa das 1,2 — bis 1,8-fache, normalerweise das 1,5 — bis 1,6-fache des Volumens des Presskörpers 70. Das Verhältnis von Füllvolumen zu Pressvolumen wird zuvor durch einige einfache Versuche bestimmt.

## 2. — Pressen (Fig. 5B)

Nach beendigter Füllung und nach Ausfahren des Fülltrichters 22 nach oben aus dem Füllkasten 34 wird dieser mittels des Transportbandes 32 nach rechts unter die Pressplatte 48 verfahren, so dass er über dem Pressentisch 30 steht. Mit dem Positionierantrieb 56 (Fig. 3) wird die genaue Ausrichtung des Kastens 34 auf die Pressplatte 48 erreicht. Beim Einfahren des Presskastens 34 unter die Pressplatte 48 treten die Schienen 38 (Fig. 3) in Verbindung mit den Hubkolbenstangen 42.

Die Pressplatte wird nun hydraulisch, pneumatisch oder elektromechanisch in den Presskasten 34 abgesenkt, wobei das darin befindliche Gemisch zum Formkörper 70 gepresst wird. Das Ende des Pressvorgangs kann über den maximal erwünschten Pressdruck oder über das erwünschte Endvolumen des Presskörpers gesteuert werden.

Ueberraschenderweise sind nur relativ geringe Pressdrücke notwendig, die zwischen 1 und 20 MPa liegen, vorzugsweise zwischen 3 und 10 MPa. Als Presszeit haben sich Zeiten im Bereich von 5 bis 180 Sekunden, vorzugsweise 10 bis 60 s bewährt ; danach kann mit dem Ausformen begonnen werden.

Nach Erreichen des Enddruckes oder des Endvolumens wird die Presse drucklos gemacht und die Pressplatte, die auf den Presskörper 70 durch ihr Eigengewicht einwirkt, in dieser Lage festgehalten.

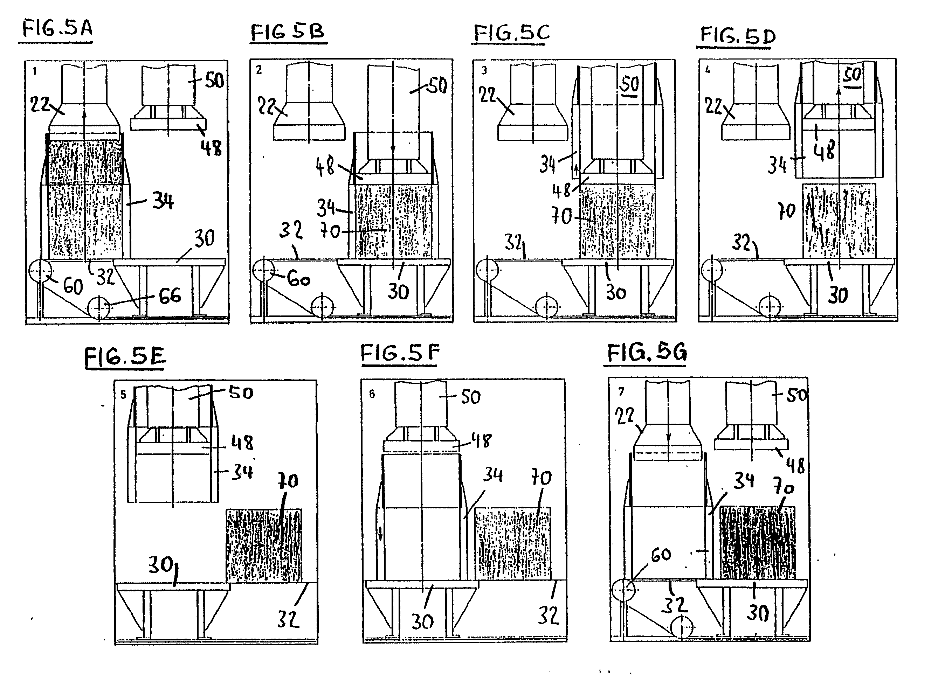

## 3. — Ausformen (Fig. 5C)

Die Hebezylinder 44 (Fig. 3) werden in Betrieb gesetzt und ziehen den Formkasten 34 nach oben vom Presskörper 70 ab, bis die Unterkante des Kastens 34 über der Unterkante der Pressplatte 48 liegt. Der Presskörper 70 wird in dieser Phase durch des Gewicht der Pressplatte 48 und der Kolbenstange 50 festgehalten.

## 4. — Freigabe (Fig. 5D)

Bei festgehaltenem Formkasten 34 in dessen höchster Lage wird die Pressplatte 48 innerhalb des Kastens 34 nach oben gefahren und gibt dabei den Presskörper 70 frei.

## 5. — Presskörpertransport (Fig. 5E)

Bei hochgefahrenem Formkasten 34 und hochgefahrener Pressplatte 48 wird das Förderband 32 auf Vorwärtsfahrt geschaltet und in Betrieb gesetzt, bis sich der erhaltene Presskörper 70 neben der Pressstation 12 befindet, und zwar so weit, wie es dem Abstand der vertikalen Mittelachsen des Fülltrichters 22 und der Presse 12 (Abstand A in Fig. 1) entspricht.

## 6. — Absenken des Formkastens (Fig. 5F)

Bei festgehaltener Pressplatte 48 wird der Formkasten 34 mittels der Zylinder 44 (Fig. 3) abgesenkt und auf dem Band 32 oberhalb des Pressentisches 30 abgesetzt.

## 7. — Erreichen der Ausgangsposition (Fig. 5G)

Das Transportband 32 wird nach links in Betrieb gesetzt und bringt den Formkasten 34 unter den Fülltrichter 22, wie es oben unter Schritt 1 bereits beschrieben ist. Die Anlage ist nun für einen weiteren Presszyklus bereit.

Vor Einleiten des Schrittes 5 muss ein Presskörper vom rechten Ende des Bandes 32 abgenommen werden. Es sei noch ergänzt, dass das Band 32 nur schrittweise arbeitet und im Laufe eines Zyklus zwei Schritte nach rechts (Stufen 2 und 5) und einen Schritt nach links (Stufe 7) ausführt.

Die Geschwindigkeit des Bandes 32 einschliesslich dessen Stillstandszeiten hängt von der erforderlichen minimalen Festigkeit der Presskörper 70, die am Ende des Bandes angekommen sind, und damit auch von der Länge des Bandes ab. Diese Länge muss bei vorgegebener Minimalhärte des letzten Presskörpers an den gewünschten Produktionsumfang angepasst werden. Im allgemeinen ist die Minimalhärte schon nach etwa 60 Minuten erreicht, jedoch sind manchmal Zeiten bis zu 4 Stunden erforderlich.

Bei Produktionsmengen, die eine zu grosse Länge des Bandes erfordern würden, müssen zwei erfindungsgemässe Vorrichtungen nebeneinander angeordnet werden. Es ist aber auch möglich, obwohl es zur Zeit nicht bevorzugt wird, das zu verpressende Gemisch auf eine höhere Temperatur zu bringen und/oder die aus der Presse entlassenen Presskörper durch eine Heizzone zu leiten. Die Minimalhärtezeit kann auch durch Zugabe von Abbindebeschleunigern und/oder Verwendung oder Mitverwendung schnellhärtender Zementsorten verkürzt werden.

Er wurde oben erwähnt, dass das Transportband 32 über den Schleiftisch 62, der zur Abstützung dient, gleiten muss. Dies erfordert wegen des hohen Gewichtes der auf dem Band stehenden Presskörper 70 sehr hohe Zugkräfte. Es wurde nun gefunden, dass diese Kräfte auf einen Bruchteil vermindert werden können, wenn man durch den Schleiftisch 62 von unten gegen das Band 32 einen Luftstrom durch eine oder mehrere in Längsrichtung verlaufende Lochreihen presst. Es bildet sich ein Luftkissen aus, das das Band um wenige Hundertstel Millimeter vom Schleiftisch 62 abhebt und einen praktisch reibungslosen Transport ermöglicht. Eine rauhe oder strukturierte Unterseite des Bandes erhöht die Stabilität des Luftkissens. Der Luftüberdruck unter dem Band hält zudem den Schleiftisch sauber. Der Luftdruck beträgt normalerweise etwa 0,2 bis 0,3 MPa.

Der Presskörper 70 am rechten Ende des Bandes 32 (Fig. 1) wird durch die erfindungsgemässe Greif- und Transportvorrichtung 16 behandelt. An dieser Stelle und zu diesem Zeitpunkt ist eine Abbindung unter Vorhärtung im Presskörper eingetreten, die aber für einen klassischen Transport mit bekannten Mitteln nicht ausreicht. Der Transport gelingt hingegen mit der erfindungsgemässen Vorrichtung.

Die Greifer 74 mit den gelenkig angebrachten Platten 78 werden gegen den letzten Presskörper 30 abgesenkt, bis sie auf dessen vier Seitenflächen zentriert sind. Mit Hilfe des Klemmblockes 84 (Fig. 4) werden die vier Platten 78 so stark an die Seitenflächen des Körpers 70 angedrückt, bis die Reibung der Beläge 80 die Schwerkraft am Körper 70 gerade übersteigt. Dann kann der Körper 70 vom Hubmotor 86 gehoben, entlang der Schiene 92 weggefahren und auf den Transportwagen 72 (Fig. 1) abgesenkt werden.

Typische Gemische, die mit der erfindungsgemässen Vorrichtung behandelt werden können, bestehen zu 30 bis 70 Gew.-% aus teilchenförmigen Feststoffen, und zu 20 bis 50 Gew.-% aus hydraulischem Bindemittel und Wasser, wobei das Gemisch das 0,5— bis 1,5-fache des Bindemittelgewichts an Wasser enthält. Die Korngrösse der Feststoffe kann von den feinsten Stäuben bis zu kieselgrossen Stücken bestehen ; in letzterem Fall ist ein zusätzlicher Anteil von feinen Körnern erforderlich, um die Bindung zu Presskörpern zu erhalten.

Dem verpressbaren Gemisch können noch andere Stoffe zugesetzt weren, wie Abbindebeschleuniger, organische Bindemittel usw. Das hydraulische Bindemittel wird nach Art und Menge so gewählt, dass ein transportfähiger Formkörper nach ca. 1 Std. Stehenlassen gebildet wird.

Die in den Ansprüchen definierten Vorrichtungen und Verfahren können im Rahmen des Geltungsbereiches der Ansprüche modifizert werden. Beispielsweise lassen sich auch zylindrische Presskörper herstellen. Der Formkasten, die Presse, die Greif- und Transportvorrichtung usw. werden dann auf einfache Weise an diese Zylinderform angepasst. Weiterhin kann der Verfahrensablauf im Kreis nach Art einer Karussellführung angeordnet werden, wobei die Förderbahn dann eine drehbare Anordnung von Platten ist.

**Patentansprüche**

1. Vorrichtung zur Herstellung von Formkörpern durch Verpressen, ausgehend von einem Gemisch, das im wesentlichen aus einem schüttfähigen Haufwerk, einem hydraulischen Bindemittel und Wasser besteht, mit einer Kolbenpresse und mit einer Füllstation zum Befüllen der Presse, gekennzeichnet durch eine Presse (12) mit einem ortsfesten Pressentisch (30), einem Formkasten (34) und einer Pressplatte (48), die in Richtung des Pressentisches (30) und in Gegenrichtung im Inneren des Formkastens (34) bewegbar ist, sowie mit Mitteln (42, 44) zum Heben und Senken des Formkastens (34), durch eine Greif- und Transporteinrichtung (16) zum Ergreifen der vorgehärteten Formkörper (70) auf praktisch der gesamten Fläche ihrer Seiten und zu deren Abtransport, und durch eine Förderbahn (32) für die Formkörper (70), die sich zwischen der Füllstation (10) und der Position der Greif- und Transporteinrichtung (16) erstreckt, wobei die Presse (12) neben der Füllstation (10), in Richtung der Greif- und Transport-einrichtung (16) gesehen, aufgestellt ist und der Formkasten (34) durch die Förderbahn (32) zwischen Füllstation (10) und Presse (12) bewegbar ist.

2. Vorrichtung nach Anspruch 1, dadurch gekennzeichnet, dass die Förderbahn ein endloses Schleifband ist, insbesondere aus einem faserverstärkten Kunststoff.

3. Vorrichtung nach Anspruch 1, dadurch gekennzeichnet, dass die Füllstation einen Fülltrichter aufweist, der in den darunterstehenden Formkasten absenkbar und zur gleichmässigen Verteilung des damit zugeführten Gemisches im Formkasten horizontal bewegbar ist.

4. Vorrichtung nach Anspruch 1, dadurch gekennzeichnet, dass die Presse einen oberen Presszylinder aufweist, an dessen Kolben eine nach unten gerichtete Kolbenstange befestigt ist, an deren unterem Ende die Pressplatte angebracht ist, wobei der Kolben über seitliche Pressensäulen mit dem Pressentisch verbunden ist, und wobei die genannte Förderbahn über den Pressentisch läuft.

5. Vorrichtung nach Anspruch 1, dadurch gekennzeichnet, dass die Pressplatte bis auf ein erforderliches Spiel die gleiche Form und die gleiche Grösse wie der Querschnitt des Formkastens besitzt.

6. Vorrichtung nach Anspruch 1 oder 4, dadurch gekennzeichnet, dass an der Presse Einrichtungen zum Ausrichten des Formkastens auf die Pressplatte vorgesehen sind.

7. Vorrichtung nach Anspruch 2, dadurch gekennzeichnet, dass das Förderband mit seiner Unterseite auf einem längsgerichteten Schleiftisch schleift, der über seine ganze Länge mit mindestens einer Reihe von Lufteinblaslöchern versehen ist, die gegen die Umgebung durch einen Lufteinblaskanal abgedichtet sind.

8. Vorrichtung nach Anspruch 1, dadurch gekennzeichnet, dass die Greif- und Transporteinrichtung ein in einer Schiene laufendes Fahrgestell aufweist, an dem eine Hebe- und Absenkeinrichtung hängt, an deren unterem Endbereich ein Klemmblock angebracht ist, dass am unteren Bereich des Klemmblockes Greifer um horizontale Achsen schwenkbar angeordnet sind, mit deren freien Enden über je ein Kugelgelenk je eine Greifplatte beweglich verbunden ist, welche so dimensioniert ist, dass sie eine Seite des Formkörpers praktisch vollständig bedeckt, und die gegen den Formkörper und in Gegenrichtung bewegbar ist.

9. Vorrichtung nach Anspruch 8, dadurch gekennzeichnet, dass die innere Oberfläche jeder Greifplatte mit einem Reibbelag versehen ist.

10. Verfahren zur Herstellung von Formkörpern in der Vorrichtung nach einem oder mehreren der vorstehenden Ansprüche, bei dem ein Formkasten einer Presse gefüllt und die Füllung anschliessend komprimiert wird, gekennzeichnet durch die folgenden Schritte :

1) Befüllen des unter dem Fülltrichter der Füllstation auf der Förderbahn stehenden Formkastens mit dem zu verpressenden Gemisch mit gleichförmiger Verteilung ;

2) Verfahren des gefüllten Formkastens mit Hilfe der Förderbahn auf den Pressentisch unter die Pressplatte der Presse und Verpressen des Gemisches durch Absenkung der Pressplatte ;

3) Anheben des Formkastens bei festgehaltener Pressplatte, bis die Unterkante des Formkastens oberhalb der Unterkante der Pressplatte steht ;

4) Anheben der Pressplatte bei festgehaltenem Formkasten zur Freigabe des erhaltenen gepressten Formkörpers ;

5) Verfahren des gebildeten Formkörpers aus dem Einwirkungsbereich der Presse mit Hilfe der Förderbahn ;

6) Absenken des Formkastens auf den Pressentisch bei festgehaltener Pressplatte in ihrer obersten Lage; und

7) Verfahren des Formkastens unter den Fülltrichter der Füllstation mittels der rückwärts bewegten Förderbahn.

11. Verfahren nach Anspruch 10, dadurch gekennzeichnet, dass spätestens vor Ausführung des Schrittes 5 der auf der Förderbahn stehende, in Richtung der Greif- und Transporteinrichtung gesehen letzte Formkörper von der letztgenannten Einrichtung erfasst und wegtransportiert wird.

12. Verfahren nach Anspruch 10 zum Betrieb der Vorrichtung nach Anspruch 2, dadurch gekennzeichnet, dass mindestens während der Transportbewegungen des Förderbandes durch den Schleiftisch hindurch Luft zwischen Förderband und Schleiftisch geblasen wird, um ein reibungsverminderndes Luftkissen zu erzeugen.

13. Verfahren nach Anspruch 12, dadurch gekennzeichnet, dass der Druck der eingeblasenen Luft 0,2 bis 0,3 MPa beträgt.

14. Verfahren nach Anspruch 10, dadurch gekennzeichnet, dass die Presse mit einem Enddruck von 1 bis 20 MPa, vorzugsweise zwischen 3 und 10 MPa betrieben wird.

15. Verfahren nach Anspruch 14, dadurch gekennzeichnet, dass die Presszeit 5 bis 180 s, vorzugsweise 10 bis 60 s beträgt, vom Erreichen des Enddruckes bis zur Druckentlastung beim Heben des Formkastens gerechnet.

16. Verfahren nach einem der Ansprüche 10 bis 15, dadurch gekennzeichnet, dass man eine Abbindezeit der Formkörper vom Verlassen der Presse bis zum Abführen durch die Greif- und Transporteinrichtung von 1 bis 4 Stunden einhält.

17. Verfahren nach Anspruch 10, dadurch gekennzeichnet, dass man die Formkörper auf ein vorgewähltes, konstantes Endvolumen presst.

18. Verfahren nach Anspruch 10, dadurch gekennzeichnet, dass man die Formkörper beim Pressen unter jeweils den gleichen Enddruck bringt.

## Claims

1. A device for the production of moulded elements by pressing, on the base of a mixture which is essentially composed of a flowable granulated material, a hydraulic binder, and water, comprising a piston press and a filling station for filling said press, characterized by a press (12) having a stationary press table (30), a moulding box (34), and a press ram (48) which inside said moulding box (34) is displaceable in the direction of said press table (30) and in the opposite direction, as well as means (42, 44) for elevating and lowering said moulding box (34), by a gripping and transporting device (16) serving to seize the prehardened moulded elements (70) by substantially the entire surface area of their sides and to remove them, and by a conveyor (32) for said moulded elements (70) which extends between said filling station (10) and the location of said gripping and transporting device (16), said press (12) being disposed, as seen in the direction of said gripping and transporting device (16), adjacent said filling station (10), and said moulding box (34) being displaceable by means of said conveyor (32) between said filling station (10) and said press (12).

2. A device according to claim 1, characterized in that said conveyor is an endless sliding belt, in particular of a fibre-reinforced plastics material.

3. A device according to claim 1, characterized in that said filling station is provided with a filling funnel which is capable of being lowered into the moulding box standing therebelow and is horizontally displaceable therein in view of an even distribution of the mixture delivered through said funnel.

4. A device according to claim 1, characterized in that said press is provided with an upper pressing cylinder having a downwardly extending piston rod secured to its piston, said press ram being attached to the lower end of said piston rod, said piston being connected to said press table by lateral press columns, and said conveyor running across said press table.

5. A device according to claim 1, characterized in that said press ram has the same form and the same size as the cross-section of said moulding box, except for a necessary clearance.

6. A device according to claim 1 or 4, characterized in that said press is provided with means for aligning said moulding box with said press ram.

7. A device according to claim 2, characterized in that the underside of said conveyor belt slides on a lengthwise sliding table which is provided over its entire length with at least one row of air injection holes which are sealed from the surroundings by an air injection channel.

8. A device according to claim 1, characterized in that said gripping and transporting device is provided with a running gear which runs in a rail and to which an elevating and lowering device is suspended having a clamping block attached to its lower end section, and in that grippers which are pivotable around horizontal axes are provided in the lower section of said clamping block, the free ends of said grippers being movably connected by a respective ball articulation to a respective gripper plate which is dimensioned so as to cover one side of said moulded element substantially completely and which is movable towards said moulded element and in the opposite direction.

9. A device according to claim 8, characterized in that the inner surface of each gripper plate is provided with a friction coating.

10. A method for the production of moulded elements in the device according to one or several ones of the preceding claims, wherein a moulding box of a press is filled and said filling is subsequently compressed, characterized by the following steps :

1) Filling of the moulding box which is disposed on the conveyor under the filling funnel of the filling station with the mixture to be pressed in an even distribution ;

2) Displacement of the filled moulding box by means of the conveyor on the press table under the press ram of the press and pressing the mixture by lowering said press ram ;

3) Elevation of the moulding box while the press ram is held in place until the lower edge of said moulding box is located above the lower edge of said press ram ;

4) Elevation of the press ram while the moulding box is held in place, in order to release the obtained pressed moulded element ;

5) Displacement of the formed moulded element out of the range of operation of the press by means of the conveyor ;

6) Lowering of the moulding box onto the press table while the press ram is maintained in its uppermost position ; and

7) Displacement of the moulding box under the filling station by means of the conveyor displaced backwards.

11. A method according to claim 10, characterized in that no later than before effecting step 5, the last moulded element standing on said conveyor belt, as seen in the direction of the gripping and transporting device, is seized and removed by the latter device.

12. A method according to claim 10 for operation of the device according to claim 2, characterized in that at least during the transport movements of said conveyor, air is blown through said sliding table and between said conveyor belt and said sliding table in order to produce a friction-reducing air cushion.

13. A method according to claim 12, characterized in that the pressure of the injected air amounts to 0.2 to 0.3 MPa.

14. A method according to claim 10, characterized in that said press is operated at a final pressure of 1 to 20 MPa, preferably between 3 and 10 MPa.

15. A method according to claim 14, characterized in that the pressing time, from the moment when said final pressure is attained until the pressure is relieved as said moulding box is lifted, amounts to 5 to 180 s, preferably 10 to 60 s.

16. A method according to any one of claims 10 to 15, characterized in that a setting time of the moulded elements of 1 to 4 hours is observed between their exit from the press and their removal by said gripping and transporting device.

17. A method according to claim 10, characterized in that said moulded elements are pressed to a preselected, constant final volume.

18. A method according to claim 10, characterized in that in the pressing operation, each of said moulded elements is subjected to the same final pressure.

## Revendications

1. Dispositif pour la production d'éléments moulés par pressage, à partir d'un mélange essentiellement composé d'un granulé coulant, d'un liant hydraulique et d'eau, comprenant une presse à piston et une station de chargement pour charger la presse, caractérisé par une presse (12) présentant une table de presse (30) stationnaire, un châssis de moulage (34) et un plateau de serrage (48) déplaçable en direction de ladite table de presse (30) et dans la direction opposée à l'intérieur dudit châssis (34), ainsi que des moyens (42, 44) pour soulever et abaisser ledit châssis (34), par un dispositif preneur et transporteur (16) pour saisir les éléments moulés (70) prédurcis par la surface pratiquement entière de leurs côtés et les retirer, et par un convoyeur (32) pour les éléments moulés (70) qui s'étend entre ladite station de chargement (10) et l'endroit du dispositif preneur et transporteur (16), la presse (12) étant disposée, vu en direction du dispositif preneur et transporteur (16), à côté de la station de chargement (10), et le châssis de moulage (34) étant déplaçable par le convoyeur (32) entre la station de chargement (10) et la presse (12).

2. Dispositif selon la revendication 1, caractérisé en ce que le convoyeur est une bande coulissante continue, particulièrement en matière synthétique renforcée par fibres.

3. Dispositif selon la revendication 1, caractérisé en ce que la station de chargement présente un entonnoir de chargement capable d'être abaissé dans le châssis de moulage qui se trouve dessous et déplaçable horizontalement dans celui-ci en vue d'une distribution égale du mélange alimenté par ledit entonnoir.

4. Dispositif selon la revendication 1, caractérisé en ce que la presse présente un cylindre de pressage supérieur, au piston duquel est attachée une tige de piston à l'extrémité inférieure de laquelle le plateau de serrage est monté, ledit piston étant relié à la table de presse par des colonnes de presse latérales, et ledit convoyeur glissant sur la table de presse.

5. Dispositif selon la revendication 1, caractérisé en ce que le plateau de serrage possède la même forme et la même dimension que la coupe transversale du châssis de moulage, à la différence d'un jeu nécessaire.

6. Dispositif selon la revendication 1 ou 4, caractérisé en ce que la presse est pourvue de dispositifs pour aligner le châssis de moulage avec le plateau de serrage.

7. Dispositif selon la revendication 2, caractérisé en ce que le côté inférieur du convoyeur à bande glisse sur une table coulissante longitudinale qui est pourvue sur sa longueur entière d'au moins une rangée de trous à injection d'air qui sont étanchés par rapport à l'entourage par une conduite à injection d'air.

8. Dispositif selon la revendication 1, caractérisé en ce que le dispositif preneur et transporteur présente un chariot qui roule dans un rail et auquel est suspendu un dispositif élévateur et abaisseur dans la partie inférieure duquel est monté un bloc de serrage, et que dans le domaine inférieur dudit bloc de serrage sont attachés des preneurs qui pivotent autour d'axes horizontaux, aux extrémités libres desquels est attachée chaque fois une plaque preneuse par une articulation sphérique correspondante, ladite plaque étant dimensionnée de sorte qu'elle recouvre pratiquement complètement un côté de l'élément moulé et étant déplaçable vers ce dernier et dans la direction opposée.

9. Dispositif selon la revendication 8, caractérisé en ce que la surface intérieure de chaque plaque preneuse est pourvue d'une couche de friction.

10. Procédé pour la production d'éléments moulés dans le dispositif selon une ou plusieurs des revendications précédantes, où le châssis de moulage d'une presse est chargé et la charge est ensuite comprimée, caractérisé par les étapes suivantes :

1) Chargement du châssis de moulage disposé sur le convoyeur et sous l'entonnoir de chargement, avec le mélange à presser en distribution égale ;

2) Déplacement du châssis chargé sur la table de presse au moyen du convoyeur, sous le plateau de serrage de la presse, et pressage du mélange par abaissement du plateau de serrage ;

3) Elévation du châssis alors que le plateau de serrage est retenu, jusqu'à ce que l'arête inférieure du châssis se trouve au-dessus de l'arête inférieure du plateau de se r rage ;

4) Elévation du plateau de serrage alors que le châssis est retenu, afin de libérer l'élément moulé pressé qui a été obtenu ;

5) Déplacement de l'élément moulé formé en-dehors du domaine d'opération de la presse, à l'aide du convoyeur ;

6) Abaissement du châssis sur la table de presse alors que le plateau de serrage est retenu dans sa position extrême du haut ; et

7) Déplacement du châssis sous l'entonnoir de chargement de la station de chargement, au moyen du convoyeur entraîné en marche arrière.

11. Procédé selon la revendication 10, caractérisé en ce qu'au plus tard avant d'effectuer l'étape 5, le dernier élément moulé se trouvant sur le convoyeur, vu en direction du dispositif preneur et transporteur, est saisi et retiré par ce dernier dispositif.

12. Procédé selon la revendication 10 pour la mise en oeuvre du dispositif selon la revendication 2, caractérisé en ce qu'au moins pendant les mouvements de transport du convoyeur à bande, de l'air est soufflé à travers la table coulissante entre le convoyeur à bande et la table coulissante afin de produire un coussin pneumatique réducteur de la friction.

13. Procédé selon la revendication 12, caractérisé en ce que la pression de l'air injecté est de 0,2 à 0,3 MPa.

14. Procédé selon la revendication 10, caractérisé en ce que la presse est mise en oeuvre à une pression finale de 1 à 20 MPa, de préférence entre 3 et 10 MPa.

15. Procédé selon la revendication 14, caractérisé en ce que la durée de pressage, à partir du moment où la pression finale est atteinte jusqu'à la décharge au moment où le châssis est soulevé, est de 5 à 180 s, de préférence de 10 à 60 s.

16. Procédé selon l'une quelconque des revendications 10 à 15, caractérisé en ce que l'on observe une durée de prise d'une à quatre heures de la sortie de la presse jusqu'à la reprise par le dispositif preneur et transporteur.

17. Procédé selon la revendication 10, caractérisé en ce que l'on presse les éléments moulés à un volume final prédéterminé est constant.

18. Procédé selon la revendication 10, caractérisé en ce que les éléments moulés sont chaque fois soumis à la même pression finale pendant le pressage.

FIG.1

FIG.2

FIG.3

FIG.4

FIG.5A

FIG.5B

FIG.5C

FIG.5D

FIG.5E

FIG.5F

FIG.5G

EP 0 335 057 B1